(19) Europäisches Patentamt / European Patent Office / Office européen des brevets

(11) **EP 2 741 108 B1**

(12) **EUROPEAN PATENT SPECIFICATION**

(45) Date of publication and mention
of the grant of the patent:
**28.08.2019   Bulletin 2019/35**

(51) Int Cl.:
*G01S 19/46* *(2010.01)*        *G01S 19/14* *(2010.01)*

(21) Application number: **12196200.5**

(22) Date of filing: **07.12.2012**

(54) **Method for determining the position of a high orbit satellite**

Verfahren zur Bestimmung der Position eines Satelliten mit hoher Umlaufbahn

Procédé pour déterminer la position d'un satellite en orbite élevée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.06.2014   Bulletin 2014/24**

(73) Proprietor: **Technische Universität München**
**80333 München (DE)**

(72) Inventors:
• **Henkel, Patrick**
**82275 Emmering (DE)**
• **Knogl, Sebastian**
**80803 München (DE)**

(74) Representative: **Herrmann, Franz**
**Dendorfer & Herrmann**
**Patentanwälte Partnerschaft mbB**
**Neuhauser Straße 47**
**80331 München (DE)**

(56) References cited:
**DE-A1-102011 001 296**

• **SEBASTIAN KNOGL J ET AL: "Precise
positioning of a geostationary data relay using
LEO satellites", ELMAR, 2011 PROCEEDINGS,
IEEE, 14 September 2011 (2011-09-14), pages
325-328, XP031976472, ISBN: 978-1-61284-949-2**
• **Toshiaki Iwata ET AL: "Remote Synchronization
Experiments for Quasi-Senith Satellite System
Using Current Geostationary Satellites",
INTERNATIONAL JOURNAL OF NAVIGATION
AND OBSERVATION, vol. 48, no. 1, 1 January
2010 (2010-01-01), pages 137-10, XP055290303,
US ISSN: 1687-5990, DOI: 10.1155/2008/462062**

## Description

The invention relates to a method for determining the position of a high orbit satellite, in particular of a geostationary satellite, situated above a plurality of navigation satellites wherein:

- navigation signals emitted by navigation satellites are received by a plurality of navigation devices, wherein the navigation devices are situated below the navigation satellites and wherein the navigation signals are used for determining the position of the navigation devices;
- at the position of the navigation devices positioning signals are emitted, which are received by the high orbit satellite and transmitted to a central unit; and
- the central unit measures time delays of the positioning signals along their way from the navigation devices to the central unit and determines the position of the high orbit satellite based on the measured time delays.

The invention further relates to a satellite system.

Such a method and such a satellite system are known from [6] and [7]. In the known method and in the known satellite system navigation signals from navigation satellites of a Global Navigation Satellite System (GNSS) are used for determining the position of navigation devices on Low Earth Orbit (LEO) satellites. The LEO satellites also emit positioning signals, which are received by the high orbit satellite, in particular a geostationary (GEO) satellite and forwarded to a ground station. The ground station then measures time delays of the positioning signals along their way from the navigation devices to the ground station and determines the position of the GEO satellite based on the measured time delays. Further methods are known from [12] and [13].

The precise positioning of geostationary (GEO) satellites at centimeter level is a challenging task. Ground based ranging systems generally suffer from signal disturbances by the ionosphere and troposphere. Network solutions combining range measurements of several ground stations as well as single station solutions using range and angular measurements are not achieving positioning accuracies below 10-100 m (cf. [1] and (cf. [2]). Space born solutions based on GNSS services have to deal with only a few signals transmitted by GNSS satellites located at the opposite side of the Earth. A bad geometrical constellation and low signal to noise levels due to a high free space loss are the consequence. Simulations show reachable accuracies at around 5 m (cf. [3]).

In common positioning solutions based on pseudorange measurements, the position as well as the transmitter and receiver clocks have to be estimated. Previous investigations (cf. [6] and [7]) show that such a concept leads to a bad conditioned geometry matrix in the case of GEO satellite positioning using LEO satellites. The consequence is a Positional Dilution of Precision (PDOP) of > 100 which prevents high positioning accuracies.

A precise positioning of geostationary data relays would be beneficial, since it would allow a precise prediction of the Doppler shift, which would result in a less complex synchronization and in a reduction of guard bands in Frequency Division Multiple Access (FDMA) schemes. A precise positioning of GEO satellites would also allow a precise time synchronization, which would result in a reduction of guard bands in Time Division Multiple Access (TDMA) schemes. Precise positioning of GEO satellites would finally also allow aligning the antennas of LEO satellites precisely onto GEO satellites. A precise alignment would increase the average attenna gain and reduce interference with neighboring systems.

Proceeding from this related art, the present invention seeks to provide a method and a satellite system, in which the position of a high orbit satellite can be determined with high accuracy.

This object is achieved by a method having the features of the independent claim. Advantageous embodiments and refinements are specified in claims dependent thereon.

In the method and in the satellite system, each of the navigation devices uses the navigation signals from the navigations satellites, and information on its own position and the position of the central unit for synchronizing a clock at the place of the navigation device with a central unit clock of the central unit. The sychonisation is used by the central unit for determining the time delay of the positioning signals along their way from the navigation devices via the high orbit satellite to the central unit. The invention is therefore based on the finding, that the information on the position of the navigation devices and of the central unit can be used for synchronizing the clocks of the navigation device and of the central unit. Having synchronized the clocks, the time delays of the positioning signals along their way from the navigation devices via the high orbit satellite to the central unit can be determined precisely. In consequence, also the position of the high orbit satellite can be determined with high precision. Simulations show that a precision in the centimeter range can be obtained.

In one embodiment the positioning signals are formed by timing information embedded in a protocoll for transmitting information from the place of the navigation device to the central unit. The central unit uses the timing information for determining the time delay of the positioning signals along their way from the navigation devices via the high orbit satellite to the central unit. Thus existing data links can be used. The timing information can for example be transmitted by emission time stamps which are embedded in the frames of a data transmission from the place of one of the navigation device to the central unit. The emission time stamps can be used by the central unit for determining the time delay of the positioning signals along their way from the navigation devices via the high orbit satellite to the central unit.

In another embodiment, each navigation device is provided in a low orbit satellite. The angular extension of low orbit satellites as seen from the high orbit satellite is generally bigger than the angular extension of ground stations on the Earth. If the positioning signals are emitted from low orbit satellites, the precision in the positioning of the high orbit satellite is therfore higher as the precision obtained by a method, in which the positioning signals are emitted by ground stations.

In a further embodiment, the positions of low orbit satellites are determined by each low orbit satellite receiving navigation signals from navigation satellites and processing the navigation signals for determining its own position. The computational power of navigation devices on low orbit satellites is usually sufficient for allowing the navigation devices onto low orbit satellites to calculate the position of the low orbit satellites.

The central unit can be provided in a ground station. Each of the low orbit satellites can then use the navigation signals from the navigations satellites, and information on its own position and the position of the ground station for synchronizing its own satellite clock with a ground station clock. The low orbit satellites emit the positioning signals, which are transmitted to the ground station via the high orbit satellite, wherein the satellite clocks are used for providing the positioning signal with an emission time stamp. The ground station receives the positioning signals, which have been emitted from a plurality of low orbit satellites and which have been transmitted to the ground station by the high orbit satellite, and determines the position of the geostationary satellite based on the measured time delay of the positioning signals along their way from the emitting low orbit satellite via the high orbit satellite to the central unit, wherein the ground station uses the emission time stamp for determining the time delay of the positioning signal along its way from the emitting low orbit satellite via the high orbit satellite to the central unit. As simulations show, such a method and satellite system can provide particularly high precisions in the positioning of the high orbit satellite.

The central unit can also be provided in a satellite. If the enough computational power is available on the satellite, such a configuration renders the positioning of the high orbit satellite less complex, since environmental errors caused by the atmosphere need not to be taken into account if the satellite is situated above the troposphere or ionosphere. If the satellite is situated above the ionosphere, the tropospheric error and the ionospheric error can be neglected, which are caused by the signal path through the ionosphere and the troposphere if the positioning signals are sent from the high orbit satellite to the ground station. If the satellite carrying the central unit is only above the troposphere, at least the tropospheric error can be neglected.

The central unit can also be distributed among a satellite and a ground station, wherein the positioning signals are received by components of the central unit on the satellite and wherein the measured time delays are processed by the ground station for determining the position of the high orbit satellite. If the computational power available on the satellite is not sufficient, the positioning signal can at least be received by the satellite. The measured time delays can then be sent to a ground station for further processing.

For eliminating some of the environmental and instrumental errors, a two-way range measurement can be performed. The two-way range measurement is repeatedly performed by means of a two-way range signal exchanged between the central unit and the high orbit satellite. The two-way range measurements are used for determining systematic environmental and instrumental errors, wherein the range and the environmental and instrumental errors are separated based on the differing temporal variation of the changing position of the high orbit satellite and the static systematic environmental and instrumental errors.

The environmental and instrumental errors can be determined by determining the unit vectors pointing from the central unit to the high orbit satellite by a least-square method and by applying a Kalman filter to the two-way range measurement with position of the high orbit satellite, and the environmental and instrumental errors as state variables. Thus, the environmental and instrumental errors can be obtained with high precision.

For increasing the temporal variation of the positional parameter to be determined by the two-way range measurements, the range between the central unit and the geostationary satellite can be separated in a previously known range and a variation of the range, wherein the range is determined by determining the variation of the range from the previously known range.

In one embodiment, each navigation device emits the positioning signals at multiple frequencies and the two-way measurement signals are emitted at frequencies, which correspond to the frequencies, at which the navigation devices emit their positioning signals. Transmitting the positioning signals and the signals for the two-way range measurement at multiple frequencies allows forming linear combinations of the range measurements at different frequencies.

The errors can then be determined by using geometry-preserving, ionosphere-free linear combinations of the range measurements for determining the tropospheric error, the bias of the high orbit satellite and the bias of the ground station. By using geometry-preserving, ionosphere free linear combinations, the ionospheric error can be eliminated and the number of unknown errors can be reduced.

The time delay of positioning signals is determined by a code measurement. The noise on the code measurements can be significantly reduced if additional information obtained by carrier phase measurements is used for suppressing the code noise, since the noise level of carrier phase measurements is lower than the noise level of code measurements. The time delays of the positioning signals can therefore be determined by code measurements, whose noise is suppressed by phase smoothing the code measurement, wherein the phase smoothing is performed by:

- generating a difference signal by subtracting a phase measurement on the carrier signal from the code measurement,
- filtering the difference signal by a noise-suppressing linear filter, and by
- adding the phase measurement to the difference signal.

In one embodiment, the position of the high orbit satellite is determined based on the measured time delay of the positioning signals by using a Kalman filter with the position of the high orbit satellite as a state variable. This approach allows determining the position of the high orbit satellite with high precision.

The application of a Kalman filter allows also calculating the residuum of at least one position variable so that an error message can be generated if a predefined level of the residuum is exceeded.

Further advantages and properties of the present invention are disclosed in the following description, in which exemplary embodiments of the present invention are explained in detail based on the drawings:

Figure 1    shows a first embodiment of a satellite system having the capability to determine a position of a high orbit satellite with high accuracy;

Figure 2    is flow diagram illustrating the sequence of method steps for determining the position of the high orbit satellite;

Figure 3    illustrates the path of positioning signals emitted by low orbit satellites for determining the position of the high orbit satellite;

Figure 4    contains diagrams, which demonstrate the positioning errors obtained in simulations;

Figure 5    contains diagrams, which show the dilution of precision, of (DOP) obtained by simulations;

Figure 6    contains diagrams, showing the accuracy in orbital prediction;

Figure 7    shows a further embodiment of a satellite system;

Figure 8    shows another embodiment of a satellite system; and

Figure 9    illustrates an filter setup for phase smoothing of code measurements.

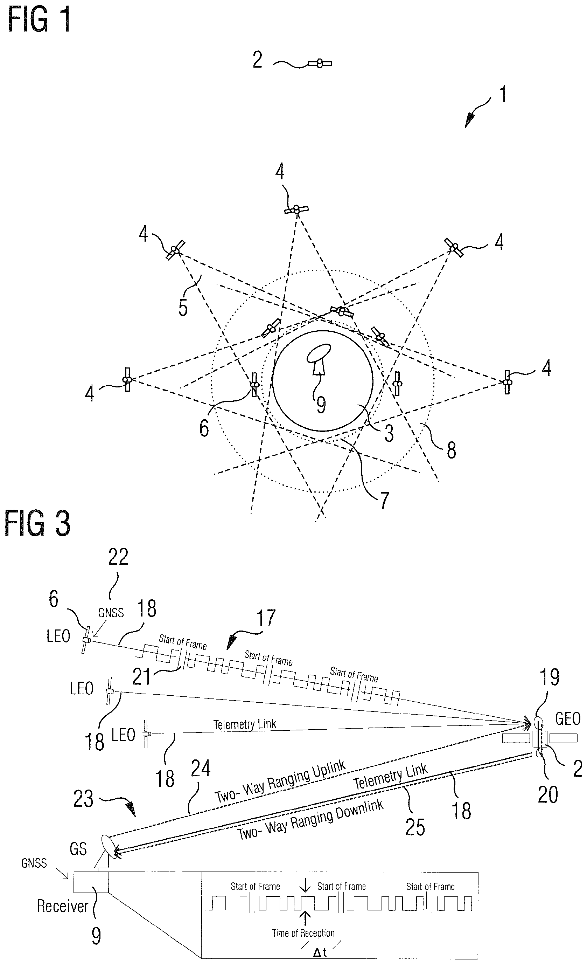

In the following Sections 1 to 5, a embodiment of a satellite system 1 is described, which is illustrated in Figure 1. In the satellite system 1, the high orbit satellite is a geostationary (GEO) satellite 1, which is located in a geosynchronous orbit. In case of a circular orbit, the GEO satellite 2 is at a distance of 35,786 km above the surface of the Earth 3.

The satellite system 1 further comprises navigation satellites 4, which may be satellites of a Global Satellite Navigation System (GNSS) such as GPS, Galileo, or GLONASS. The navigation satellites 4 are typically located at an altitude of 25,000 km above the surface of the Earth 3. These satellites are sometimes also called Medium Earth Orbit (MEO) satellites and their orbital period is typically a few hours. Since the navigations signals emitted from the navigation satellites 4 are primarily used for determining the position of entities on or near the surface of the Earth 3, beam patterns 5 of the navigation satellite are directed towards the Earth 3.

The satellite system 1 further includes Low Earth Orbit (LEO) satellites 6 at a typical altitude around 600 km. These LEO satellites 6 are above the troposphere 7, but still in the outer rims of the ionosphere 8. The orbital period of the LEO satellites 6 is typically in the range of one hour. Due to the low orbit, an ground station 9, located on the surface of the Earth 3 can get in direct contact with the LEO satellites 8 only for 15 percent of the oribital period of the LEO satellites 6. The data link between the LEO satellites 6 and the ground station 9 is therefore established by using the GEO satellite 2 as a data relay.

As described in the following section, the existing data links are now used for determining the position of the GEO satellite 2 with the help of GNSS services. Section 1 gives an overview on the method described herein. Section 2 explains in detail the improved positioning concept and the applied algorithms. The concept and algorithms were verified in a simulation environment. The results are contained in Section 4. Positioning accuracies at centimeter level enable predicting the GEO satellite orbit with high accuracies. An overview about the achievable accuracies at different time spans are presented in Section 5.

## 1. Overview

The method for GEO satellite positioning described herein enables positioning accuracies at centimeter level. The method makes use of precisely positioned Low Earth Orbit (LEO) satellites serving as navigation satellites for the GEO satellite. The positioning is based on pseudorange measurements between the LEO satellites and the ground station via a GEO satellite. In addition a Two-Way pseudorange measurement is performed between the ground station and the GEO satellite. A combination of both measurements enables eliminating several unknown errors.

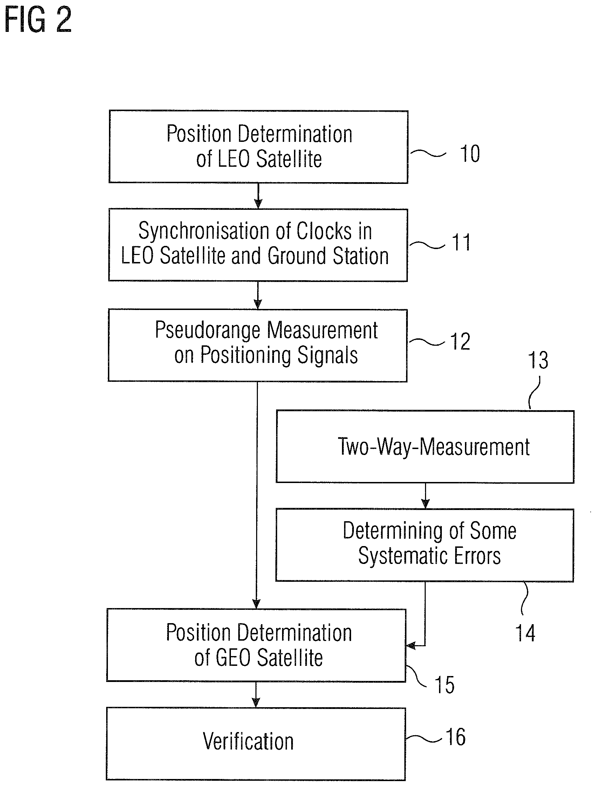

Figure 2 shows the sequence of method steps that can be performed for determining the position of the GEO satellite with high accuracy.

In a first step, a position determination 10 is performed, in which each LEO satellite 6 determines its own position by an onboard navigation device, which uses navigation signals emitted by the navigation satellites 4. Once the position of the LEO satellites 6 are known, satellite clocks of the LEO satellites can be synchronized with a clock of the ground station 9 in an synchronization 11. In a next step a pseudorange measurement 12 is performed. During the pseudorange measurement, positioning signals are emitted by the LEO satellites 6 to the GEO satellite 2. The GEO satellite 2 transmits the positioning signals to a ground station 9. Since the positioning signals are provided with a time stamp indicating the emission time of the positioning signals, the ground station 9 is able to determine the time delay between the emission of the positioning signals by the LEO satellites 6 and the time of reception at the ground station 9.

The ground station 9 further performs two-way-measurements 13 between the ground station 9 and the GEO satellite 2. Based on the pseudorange measurements of the two-way measurement 13 an error determination 14 can be performed, in which some instrumental and environmental errors can be resolved.

The errors determined in the error determination 14 can then be used for elimitting the errors in a position determination 15, in which the position of the GEO satellite 2 is eventually determined. Subsequently, a verification 16 can be performed in which a residuum of at least one position variable is determined, so that an error message can be generated if predefined limits are exceeded by the residuum.

## 2. Measurement Model and Algorithms

The embodiment of the positioning method described herein is based on a geostationary data relay formed by the GEO satellite 2.

Figure 3 shows the scheme of the messages used for the precise positioning of the GEO satellite. The LEO satellites 6 continually transmit telemetry data signals 17 over communication links 18 to the GEO satellite 2. The GEO satellite 2 receives the telemetry data signals on a receiver antenna 19 and is equipped with a transparent transponder, that forwards the telemetry data 17 via a tranmitter antenna 20 to the ground station 9. Each LEO satellite 6 preferably transmits on its own carrier frequencies.

The precise positioning of the GEO satellite 2 makes use of the existing communication links 18. For the precise positioning of the GEO satellite 2, so-called pseudorange measurements $\rho_{LE}^{k}$ between the LEO satellites 6 and the ground station 9 are performed via the GEO satellite 2. For this purpose, the telemetry data signals 17 can be used as positioning signals. In order to perform the LEO-GEO-Earth pseudorange measurements the LEO satellites 6 transmit their telemetry data according to the ECSS-E-ST-50-03C telemetry transfer frame protocol. Thereby, one virtual channel is reserved for pure data transfer whereas a second virtual channel can be used for transferring the positioning signals. A time stamp 19 in the positioning signal defines the exact moment when the frame is emitted at the LEO satellite 6. At the ground station 9, a time estimation of the start of frame for the positioning signal enables estimating the time of reception at the ground station. Thus the times delay $\Delta t$ between the time of emssion by the LEO satellite 6 and the reception at the ground station 9 can be determined. In addition, the original code sequence is available after demodulation and decoding and can be correlated with the received samples to increase the estimation accuracy.

A precise measurement of the LEO-GEO-Earth pseudoranges requires synchonized clocks on the LEO satellites 6 and the ground station 9. Time synchronization between the LEO satellite 6 and the ground station 9 is performed with the help of GNSS services. In a first step the position of the LEO satellites 6 and the position of the ground station 9 is precisely determined using navigations signals from the navigation satellites 4. The navigation signals can then be processed by navigation devices 22, that form part of the LEO satellites 6. If the position of the LEO satellites 6 and the position of the ground station 9 is precisely known, the temporal offset between the clocks on the LEO satellites 6 and the clock of the ground station 9 can be determined with high precision, since the distance between LEO satellites 6 and the ground station 9 is exactly known and therefore also the time delay of synchronisation signals exchanged directly between the LEO satellites 6 and the ground station 9.

An additional two-way pseudorange measurement 23 between the GEO satellite 2 and the ground station 9 enables to eliminate some error sources. The two-way measurement 23 comprises an up-link connection 24 and a down-link connection 25, which takes the same path through the GEO satellite 2 as the positioning signals.

The pseudorange measurement between the i-th LEO satellites 6 and the ground station 9 can be modeled as:

$$\rho_{LE}^{i,k} = c\left(t_E^{i,k} - t_L^{i,k}\right) = \left\|\vec{r}_G - \vec{r}_L^i\right\| + \left\|\vec{r}_E - \vec{r}_G\right\| + I_{LG}^{i,k} - b_L^{i,k} + b_G^{i,k} + I_{GE}^{i,k} + T_{GE} + b_E^{i,k} + \eta_{LE}^{i,k}. \tag{1}$$

Therein, *i* is an index referring to the *i*-th LEO satellites 6 emitting the positioning signal on the *k*-th frequency,

$\rho_{LG}^{i,k}$ is the measured pseudorange,

$t_E^{i,k}$ is the time of reception at the ground station 9,

$t_L^{i,k}$ is the time of emission of the positioning signals,

*c* is the velocity of light.

$\vec{r}_G$, $\vec{r}_L^i$, and $\vec{r}_E$ are respectively the positions of the GEO satellite 2, the *i*-th LEO satellites 6, and the ground station 9 in an arbitrary cartesian coordinate system, for example in an Earth centered cartesian coordinate system.

$I_{LG}^{i,k}$ is the ionospheric error on the LEO-GEO link and

$I_{GE}^{i,k}$ is the ionospheric error on the GEO-Earth link.

$b_L^{i,k}$ is the LEO satellite bias, including RF path delay, oscillator bias, and any other instrumental bias.

$b_G^{i,k}$ is the correspondent GEO satellite bias for each LEO carrier frequency.

$b_E^{i,k}$ is the receiver bias due to the ground station delay on the GEO-Earth link and

$\eta_{LE}^{i,k}$ is the receiver noise.

Thus the measured pseudorange is determined by measuring the time delay of the positioning signal along its way from the LEO satellites 6 to the ground station 9. For determining the position $\vec{r}_G$ of the GEO satellite 2, the environmental errors, namely the ionospheric biases $I_{LG}^{i,k}$ and $I_{GE}^{i,k}$ and the tropospheric path $T_{GE}$, as well as the instrumental errors, namely the biases $b_L^{i,k}$, $b_G^{i,k}$, and $b_E^{i,k}$ must be resolved.

As has been pointed out in Section 1, in contrast to GNSS pseudorange measurements the offset between the transmitter clock on the LEO satellites 6 and the receiver clock of the GEO satellite 2 need not be taken into account in Equation (1), because the on-board LEO satellite clocks and the receiver clock at the ground station 9 have been synchronized via GNSS services.

For resolving the environmental and instrumental errors in Equation (1), besides the LEO-Earth pseudorange measurements, an aditional two-way pseudorange measurement on the GEO-Earth link can be performed. As the time between the uplink and downlink of the signal is very short, the troposphere and ionosphere are treated as static, so that the same ionospheric and tropospheric delay can be assumed for the uplink and the downlink. The two-way measurement 23 can then be modelled as

$$\rho_{2W}^{i,k} = 2\left(\left\|\vec{r}_E - \vec{r}_G\right\| + I_{GE}^{i,k} + T_{GE}\right) + b_G^{i,k} + b_E^{i,k} + \eta_{2W}^{i,k}, \tag{2}$$

with *k* indicating the two-way measurement at the *k-th* frequency of the *i*-the LEO satellite 6, and with $\eta_{2W}^{i,k}$ being the receiver noise of the *i*-the LEO satellite 6 at the *k*-th frequency .

For resolving the environmental and instrumental biases, geometry-preserving, inonosphere-free linear combinations of the pseudorange measurements can be formed. Such geometry-preserving, ionosphere-free combinations are known to the skilled person. The linear combination yields:

$$\rho_{2W}^{i,LC} = 2\left(\left\|\vec{r}_E - \vec{r}_G\right\| + T_{GE}\right) + b_{G,E}^{i,LC} + \eta_{2W}^{i,LC}. \tag{3}$$

wherein:

$$\rho_{2W}^{i,LC} = \sum_{k=1}^{K} \alpha^k \rho_{2W}^k$$ is the combined range,

$$b_{G,E}^{i,LC} = \sum_{k=1}^{K} \alpha^k b_G^{i,k} + \sum_{k=1}^{K} \alpha^k b_E^{i,k}$$ is the combined bias, and

$$\eta_{2W}^{i,LC} = \sum_{k=1}^{K} \alpha^k \eta_{2W}^k$$ is the combined noise

and $\alpha_k$ are the weighting coefficient, which are chosen to obtain geometry preserving, ionosphere-free linear combinations.

In the linear combinations, the range $\|\vec{r}_E - \vec{r}_G\|$, the tropospheric error $T_{GE}$, and the combined bias $b_{G,E}^{i,LC}$ are the remaining unknowns. For resolving these unknowns, the fact can be used that the GEO satellite 2 is not perfectly stationary with respect to the Earth 3 but is moving relatively to the Earth 3 on a given path, for example a path having the shape of an "8", wherein the GEO satellite 2 is moving over a region extending over 1000 km. The time period and thus the time scale of this relative motion is one day. If the time intervall between the repeated two-way measurements is in the range of minutes, the range varies, whereas the tropospheric error, and the combined bias can be assumed to be static.

By repeated measurements at time intervals, which are shorter than the time scale of the relative motion of the GEO satellite 2, the linear combined pseudorange measurement are then obtained for instants of time at which the GEO satellite 2 is at various positions.

For determining the range $\|\vec{r}_E - \vec{r}_G\|$, the tropospheric error $T_{GE}$, and the combined bias $b_{G,E}^{i,LC}$ Equation (3) is linearized by using the relationship:

$$\|\vec{r}_E - \vec{r}_G\| = \frac{(\vec{r}_E - \vec{r}_G)}{\|\vec{r}_E - \vec{r}_G\|} \cdot (\vec{r}_E - \vec{r}_G) = \vec{\mathbf{e}}_{EG} \cdot (\vec{r}_E - \vec{r}_G) \tag{4}$$

resulting in:

$$\rho_{2W}^{i,LC} = 2\left(\vec{\mathbf{e}}_{EG} \cdot (\vec{r}_E - \vec{r}_G) + T_{GE}\right) + b_{G,E}^{i,LC} + \eta_{2W}^{i,LC}. \tag{5}$$

where $\vec{\mathbf{e}}_{EG}$ is the unit vector pointing from the ground station 9 to the GEO satellite 2.

The unit vector $\vec{\mathbf{e}}_{EG}$ can iternatively be determined by a Gauss-Newton method, that means by a Least-Square estimation of $\vec{r}_G$ of the GEO satellite 2, the troposheric error $T_{GE}$ and the combined bias $b_{G,E}^{i,LC}$. For these purpose, Equation (5) is rewritten as:

$$\underbrace{\begin{bmatrix} \rho_{2W}^{i,LC}(t_1) - 2\vec{\mathbf{e}}_{EG}(t_1)\vec{r}_E \\ \vdots \\ \rho_{2W}^{i,LC}(t_N) - 2\vec{\mathbf{e}}_{EG}(t_N)\vec{r}_E \end{bmatrix}}_{\mathbf{z}_n} = \underbrace{\begin{bmatrix} 2\vec{\mathbf{e}}_{EG}(t_1) & \cdots & 0 & 2m(t_1) & 1 \\ \vdots & \ddots & \vdots & \vdots & \vdots \\ 0 & \cdots & 2\vec{\mathbf{e}}_{EG}(t_N) & 2m(t_N) & 1 \end{bmatrix}}_{\mathbf{H}_n} \cdot \underbrace{\begin{bmatrix} \vec{r}_E(t_1) \\ \vdots \\ \vec{r}_E(t_N) \\ T_{GE,z} \\ b_{G,E}^{i,LC} \end{bmatrix}}_{\mathbf{x}_n} + \underbrace{\begin{bmatrix} \eta_{2W}^{i,LC}(t_1) \\ \vdots \\ \eta_{2W}^{i,LC}(t_N) \end{bmatrix}}_{\mathbf{v}_t} \tag{6}$$

Where $t_n$ is the time of measurment, $T_{GE,z}$ is the tropospherical error seen in the direction of the zenith and $m$ is a mapping function, which takes into account the variation of the tropospherical error in a diretion other than the zenith.

The vector $\mathbf{x}_n$ contains the state variable which are to be determined. Equation (6) can be solved iteratively for $\mathbf{x}_n$ starting with an first estimation for $\vec{e}_{EG}(t_n)$. After Equation (6) has been solved for $\mathbf{x}_n$, the unit vectors $\vec{e}_{EG}(t_n)$ can be updated and Equation (6) be solved again for $\mathbf{x}_n$.

A first Kalman filter can then applied to the pseuderange measurements at different epochs, wherein the state vector includes the position $\vec{r}_G$ of the GEO satellite 2, the troposheric error $T_{GE}$ and the combined bias $b_{G,E}^{i,LC}$. The state transition model of the Kalman filter would then be:

$$
\underbrace{\begin{bmatrix} \vec{r}_G(t_{n+1}) \\ \dot{\vec{r}}_G(t_{n+1}) \\ T_{GE,z}(t_{n+1}) \\ b_{G,E}^{i,LC} \end{bmatrix}}_{\mathbf{x}_{t+1}} = \underbrace{\begin{bmatrix} 1 & \Delta t & 0 & 0 \\ 0 & 1 & 0 & 0 \\ 0 & 0 & 1 & 0 \\ 0 & 0 & 0 & 1 \end{bmatrix}}_{\mathbf{\Phi}} \cdot \underbrace{\begin{bmatrix} \vec{r}_G(t_n) \\ \dot{\vec{r}}_G(t_n) \\ T_{GE,z}(t_n) \\ b_{G,E}^{i,LC} \end{bmatrix}}_{\mathbf{x}_t} + \underbrace{\begin{bmatrix} \eta_{\vec{r}_G}(t_n) \\ \eta_{\dot{\vec{r}}_G}(t_n) \\ \eta_{T_{GE,z}}(t_n) \\ \eta_{b_{G,E}^{i,LC}}(t_n) \end{bmatrix}}_{\mathbf{w}_t} \tag{7}
$$

After the first Kalman filter has been applied to the two-way measurements, the pseudorange measurements on the positioning signal can be processed. For processing the pseudorange measurements on the positioning signals the pseudorange measurements from Equation (1) are linearly combined to form the same geometry preserving, ionosphere-free combination as the linear combination of the two-way measurements, resulting in:

$$
\rho_{LE}^{i,LC} = \left\| \vec{r}_G - \vec{r}_L^i \right\| + \left\| \vec{r}_E - \vec{r}_G \right\| - b_L^{i,LC} + b_{G,E}^{i,LC} + T_{GE} + \eta_{LE}^{i,LC} \tag{8}
$$

Applying the additional two-way measurements enables eliminating $\|\vec{r}_E - \vec{r}_G\|$, $T_{GE}$ and $b_{G,E}^{i,k}$ from the pseudarange measurements in Equation (8). In linearized form, Equation (8) can be rewritten as:

$$
\underbrace{\rho_{LE}^{i,LC} - \left\| \vec{r}_E - \vec{r}_G \right\| - b_{G,E}^{i,LC} - T_{GE} + \vec{e}_{GL}^i \vec{r}_L^i}_{\mathbf{z}_n^i} = \vec{e}_{GL}^i \vec{r}_G - b_L^{i,LC} + \eta_{LE}^{i,LC} \tag{9}
$$

or in matrix notation:

$$
\underbrace{\begin{bmatrix} z_n^1 \\ \vdots \\ z_n^I \end{bmatrix}}_{\mathbf{z}_t} = \underbrace{\begin{bmatrix} \vec{e}_{GL}^1 & -1 & \cdots & 0 \\ \vdots & \vdots & \ddots & \vdots \\ \vec{e}_{GL}^I & 0 & \cdots & -1 \end{bmatrix}}_{\mathbf{H}_t} \cdot \underbrace{\begin{bmatrix} \vec{r}_G \\ b_L^{1,LC} \\ \vdots \\ b_L^{I,LC} \end{bmatrix}}_{\mathbf{x}_t} + \underbrace{\begin{bmatrix} \eta_{2W}^{1,LC} \\ \vdots \\ \eta_{2W}^{I,LC} \end{bmatrix}}_{\mathbf{v}_t} \tag{10}
$$

It should be noted that $\vec{r}_E$ can be estimated by geodetic GNSS receivers with insignificant remaining error. The LEO satellites 6 are further assumed to carry space born high precision GNSS receivers. This enables estimating $\vec{r}_L^i$ with centimeter accuracy (cf. [8]).

For increasing the temporal variation of the variable $\vec{r}_G$, the variable can be expanded around a stationary $\vec{r}_G^0 : \vec{r}_G = \vec{r}_G^0 + \Delta\vec{r}_G$. Then $\Delta\vec{r}_G$ can be used instead of $\vec{r}_G$ as a variable.

It should further be noted that the linear combination need not be applied if the ionospheric error can be neglected. That can be the case if the positioning signals are transmitted in the Ka-band. Applying appropriate models of the ionospheric electron density leads to error bounds for the ionospheric path delay at GNSS frequencies on ground of < 1.5 m (90% 3 m) (cf. [4]). Compared to GNSS signals the ionospheric path delay in Ka-band is reduced by a factor of > 300 due to the frequency dependency of $1/f^2$. Therefore, the worst case error introduced by $I_{L,G}^{i,k}$ can be bound to < 1 cm.

For determining $\vec{r}_G$ and the combined biases $b_L^{i,LC}$ of the i-th LEO satellite 6, a second Kalman-filter is applied. A post processing on ground enables to estimate the position $\vec{r}_G$ of the GEO satellite 2 and the combined biases $b_L^{i,LC}$ according to:

$$\mathbf{z}_t = \mathbf{H}_t \mathbf{x}_t + \mathbf{v}_t, \qquad (11)$$

where $\mathbf{H}_t$ includes the unit vectors pointing from the LEO satellites to the GEO satellite, $\mathbf{v}_t \sim \mathcal{N}\left(\mathbf{0}, \Sigma_{\mathbf{v}}\right)$ is the measurement noise and $\mathbf{x}_t$ is the state vector that comprises the GEO satellite position $\vec{r}_G$ and the combined biases $b_L^{i,LC}$ of the i-th LEO satellite 6.

The raw solution is achieved by applying the standard Newton approach and Least-Squares estimation known from GNSS solutions as set forth in standard GPS literature like [9] or [10].

The relative movement of the GEO satellite 2 in an Earth Centred Earth Fixed (ECEF) coordinate system is very small. This enables the use of a linear state space model for the satellite movement according to

$$\underbrace{\begin{bmatrix} \vec{r}_G(t_{n+1}) \\ \dot{\vec{r}}_G(t_{n+1}) \\ b_L^{1,LC} \\ \vdots \\ b_L^{I,LC} \end{bmatrix}}_{\mathbf{x}_{t+1}} = \underbrace{\begin{bmatrix} 1 & \Delta t & 0 & \cdots & 0 \\ 0 & 1 & 0 & \cdots & 0 \\ 0 & 0 & 1 & \cdots & 0 \\ \vdots & \vdots & \vdots & \ddots & \vdots \\ 0 & 0 & 0 & \cdots\cdots & 1 \end{bmatrix}}_{\Phi} \cdot \underbrace{\begin{bmatrix} \vec{r}_G(t_n) \\ \dot{\vec{r}}_G(t_n) \\ b_L^{1,LC} \\ \vdots \\ b_L^{I,LC} \end{bmatrix}}_{\mathbf{x}_t} + \underbrace{\begin{bmatrix} \eta_{\vec{r}_G}(t_n) \\ \eta_{\dot{\vec{r}}_G}(t_n) \\ \eta_{b_L^{1,LC}} \\ \vdots \\ \eta_{b_L^{I,LC}} \end{bmatrix}}_{\mathbf{w}_t} \qquad (12)$$

with the state transition matrix $\Phi$ and the white Gaussian process noise $\mathbf{w}_t \sim \mathcal{N}\left(\mathbf{0}, \Sigma_{\mathbf{w}}\right)$. The GEO satellite position and velocity are estimated with a Kalman filter, which consists of alternating state predictions and updates:

$$\hat{\mathbf{x}}_t^- = \Phi \hat{\mathbf{x}}_{t-1}^+$$

$$\hat{\mathbf{x}}_t^+ = \hat{\mathbf{x}}_t^- + \mathbf{K}_t \left(\mathbf{z}_t - \mathbf{H}_t \hat{\mathbf{x}}_t^-\right). \qquad (13)$$

Therein, $\mathbf{K}_t = \mathbf{P}_{\hat{\mathbf{x}}_t^-} \mathbf{H}_t^T \left(\mathbf{H}_t \mathbf{P}_{\hat{\mathbf{x}}_t^-} \mathbf{H}_t^T + \Sigma_v\right)^{-1}$ represents the Kalman gain with the a posteriori error covariance matrix $\mathbf{P}_{\hat{\mathbf{x}}_t^-}$.

For optimum filter results a sophisticated satellite orbit model can be implemented in the Kalman filter. This leads to a complex implementation. Instead a linear state space model can be used. The results can additionally be filtered by smoothing the results with local regression over a plurality of epochs. The smoothing can, for example, be performed by a Least-Square method using polynominals as smoothing functions.

An example for such an approach is given in Section 3 and 4.

For verifying the obtained position of the GEO satellite 2, residua $r_t^+$ can be calculated according to

$$r_t^+ = \mathbf{z}_t - \mathbf{H}_t \hat{\mathbf{x}}_t^+ \qquad (14)$$

If the resisdua exceed predefined limits, an error signal can be generated.

### 3. Scenario and Simulation Environment

The scenario assumed in the following simulations consists of a 15 LEO satellite constellation (cf. Table 1) and one GEO satellite above Europe (longitude of 10°). The LEO constellation forms a representative selection considering altitude and inclination out of all approximately 400 LEO satellites currently out in space (cf. [7]). The LEO satellites appear in a solid angle of $\pm 10°$ as seen from the GEO satellite. As ground station, an antenna located at the campus of the Technische Universität München (TUM) (N 48.151041°, E 11.568431°) in Munich was assumed.

The simulation environment consisted of a Matlab code with an interface to the Satellite Toolkit (STK) from AGI. STK provided the orbital information (position and velocity) for each satellite. The orbits were calculated using the High Precision Orbit Propagator (HPOP) according to the following models: The Earth geoid was based on the EGM96 model with degree and order 21, full solid tides and ocean tides. Third body gravitational influences from all planets were considered as well as solar radiation pressure and atmospheric drag. The GEO-Earth link was modelled applying the ITU-Recommendations for atmosphere models, i.e. the rain model according to ITU-R P.618-9 and the atmospheric absorption model according to ITU-R P.675-5. The overall link budget can be seen in Table 2.

The telemetry link with 2.3 MHz bandwidth per satellite showed a worst case carrier to noise level of $C / N_0 = 56.0$ dBHz. This enabled to transmit data with a data-rate of several Mbit/s (cf. also [5]).

In GNSS applications usually the Cramer-Rao Bound is used to derive a lower bound for the achievable accuracy in position estimation. As already mentioned in Section 2, the original code sequence is available after demodulation and decoding. Therefore a data-aided code measurement can be realized at the receiver. As the dynamics of the signal (frequency shift due to Doppler, and other effects) are quite low, long integration times are possible at the receiver side. In addition, the method described herein does not require real-time determination of the position, which enables post processing by filtering over multiple epochs. For optimum filter results a sophisticated satellite orbit model can be implemented in the Kalman filter. This leads to a complex implementation. Therefore only the linear state space model was applied instead but with an additional filter for smoothing over 500 epochs with local regression using weighted linear Least-Squares and a 2nd degree polynomial model. The final positioning accuracy achieved with this algorithm is shown in Section 4.

Assuming a data rate of 1 Mbit/s and a BPSK modulation led to a high $\varepsilon_B / N_0$ of 53.6 dB compared to 24 dB for GNSS services. Assuming an integration time of 10 sec the corresponding Cramer-Rao Bound was < 4 cm. For the two-way measurement a Cramer-Rao bound of 0.5 cm was determined. Referring to [8] the LEO satellite position error was assumed to be 5.0 cm. Table 3 shows the stochastic error parameters used for the simulation model.

### 4. Simulation Results

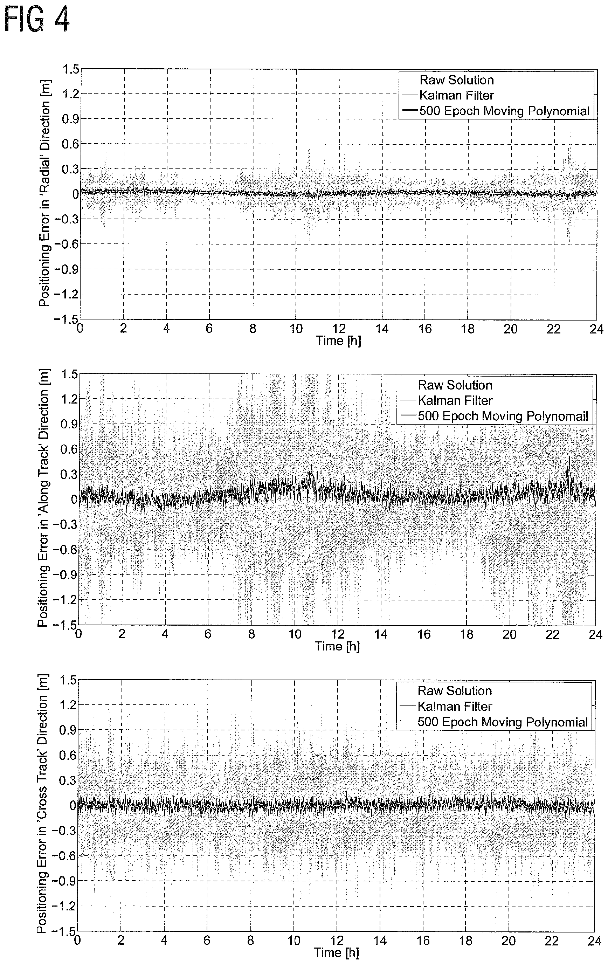

An application of the method explained in Section 2 on the 15 LEO satellite scenario presented in Section 3 leads to the positioning accuracies in radial, along track and cross track direction shown in Figure 4, which depicts the positioning accuracy of a geostationary satellite in a simulation based on the scenario and noise assumptions presented in Section 3. The plots show the errors in radial, along track and cross track direction.

The radial direction shows a very small noise compared to the cross track and along track directions. This is based on the geometrical distribution of the LEO satellites, which are all located in one solid angle of $\pm 10°$ as seen from the GEO satellite 2. A means of measure for the specific additional multiplicative effect of LEO satellite geometry on GEO positioning precision is the Dilution of Precision (DOP). It is defined for radial, along track and cross track Dilution of Precision as follows:

$$RDOP = \sqrt{\mathbf{Q}_{11}^2} \qquad ADOP = \sqrt{\mathbf{Q}_{22}^2} \qquad CDOP = \sqrt{\mathbf{Q}_{33}^2} \qquad (10)$$

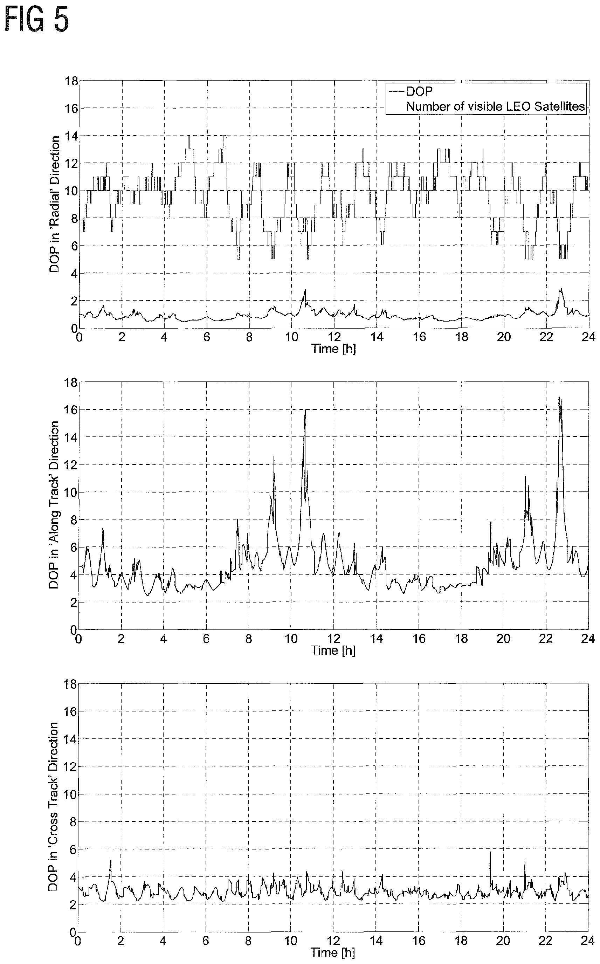

with $\mathbf{Q}_t = (\mathbf{H}_t^T \mathbf{H}_t)^{-1}$ and $\mathbf{H}_t$ as defined in Equation (10). The simulated DOP of the positioning solution based on the LEO satellite constellation of Table 1 can be seen in Figure 5, which depicts the DOP of a 15 LEO satellite based positioning solution in radial, along track and cross track direction. The diagram on top also includes the number of visible LEO satellites over time.

The mean value for the overall Positional Dilution of Precision

$$\overline{PDOP} = \frac{\sum_{t=1}^{T}\sqrt{\mathbf{Q}_{11}^{2}(t)+\mathbf{Q}_{22}^{2}(t)+\mathbf{Q}_{33}^{2}(t)}}{T}$$

is around 5.6 and therefore slightly above the one GNSS receivers see on ground (cf. [11]). In comparison to [7], where a solution with clock estimation is presented, the PDOP has reduced by a factor of 100. As most of the LEO satellites fly on polar orbits the probability of LEO satellites above the Earth poles is much higher compared to equatorial regions. This leads to high DOP values in the along track component, whereas the cross track components shows quite low DOP values. The radial direction shows the lowest DOP as it is almost collinear to the measurement direction. Figure 5 in addition shows the DOP dependent on the number of visible LEO satellites.

## 5. Orbit Propagation

Positioning accuracies at centimetre level enable also predicting the GEO satellite orbit with high accuracies. In the following simulations the orbits were predicted with the HPOP propagator from AGI STK. In order to calculate an initial state vector for position and velocity, the propagator applied an interpolation of order 5 to all epochs provided by the previous orbit estimation. To avoid Runge's phenomenon (high oscillation at the borders of the interpolation region) the initial state vector of position and derived velocity were estimated at a time a few epochs before the end of the data set.

In order to determine the final positioning errors of the orbit prediction, the original orbit positions were compared with the propagated positions. The parameter sets for the HPOP propagator were the same for the original orbit positions as well as for the orbit prediction.

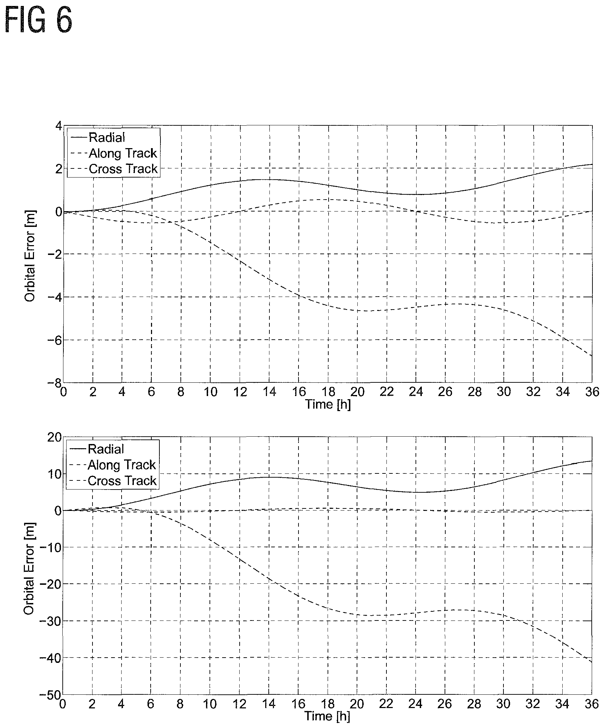

Investigations have been made about the achievable orbit prediction accuracies depending on the time steps and number of epochs of the estimated GEO satellite position. Using a time span of 24 h and a position estimation every 1 sec led to an orbit prediction shown in the upper diagram of Figure 6. For more than 6 hours the orbital prediction error stayed below 1 m. As the along track direction showed the largest estimation errors (see Section 4) it also showed the largest prediction errors. Applying the same time span but reducing the time steps to every 10 sec led to the orbital errors shown in the lower diagram of Figure 6.

## 6. Variants

The method and the satellite system described therein can be varied in various ways.

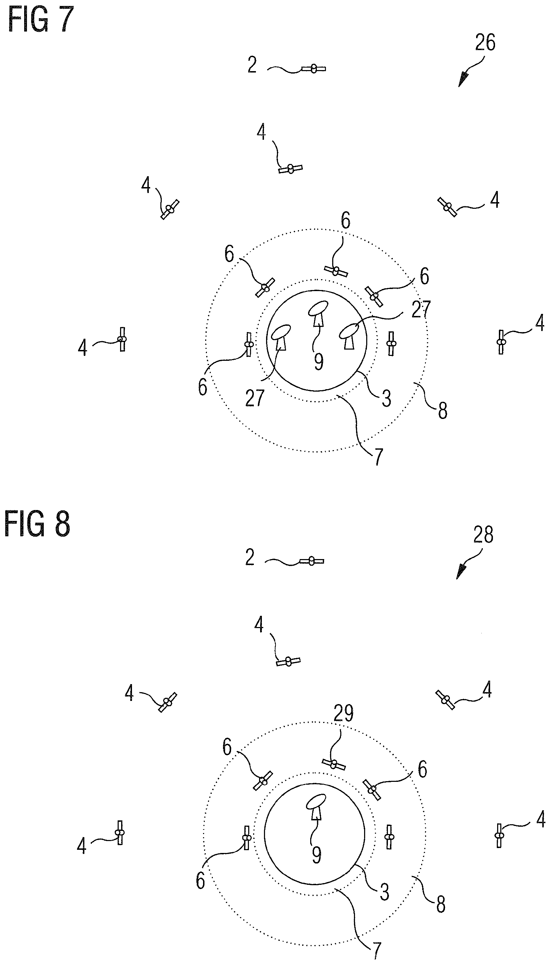

A further embodiment is depicted in Figure 7. Figure 7 shows a satellite system 26, in which the navigation devices 22 are situated on the ground in additional ground stations 27, which are distributed over the Earth 3. However, since the angular extension of the ground stations 27 as seen from the GEO satellite 2 is smaller than the angular extension of the LEO satellite 6, the accuracy, which can be obtained is smaller than the accuracy obtained by the embodiment of the preceding sections.

Figure 8 shows a satellite system 28, in which the processing is performed on a central satellite 29 situated above the troposphere but below the navigation satellite 4. The central satellite can at least receive the positioning signal from the LEO satellites 6 or the additional ground stations and further perform the two-way measurement. The central satellite can then either process the data by using data processing means on board or forward the data to a ground station for further processing.

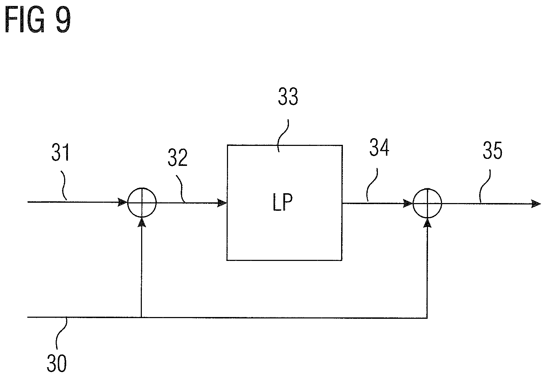

Figure 9 further illustrates a variant in the data processing. For reducing the noise on the code measurements an ionosphere-free linear combination of carrier phase measurement 30 can first be substracted from the ionosphere-free linear combination of the code measurement 31 and the resulting difference signal 32 can be filtered by a low pass filter 33. The filtered signal 34 will then be added to the carrier phase measurement which results in an phase smoothed, ionosphere-free linear combination 35 of code measurement,s since the noise of the carrier phase measurement is considerably lower than the noise of the code measurements.

The position of the LEO satellite 6 can also be determined by using ephemerides data. Thus, the time intervals between positioning based on navigation messages can be increased.

It should finally be noted, that the timing information on the time of emission of the positioning signals can be transferred by many ways. Instead of using the time stamps embedded in the communication protocoll of the communication between LEO satellite 6 and ground station 9, the timing informaiton can also be transmitted by separate communication links such as a direct communication link between LEO satellite 6 and ground station 9. The synchronisation it self can also be performed by transmitting information on the time offset between LEO satellite 6 and ground station 9.

## 7. Advantages

The method described herein offers a new solution for geostationary satellite precise positioning. Pseudorange measurements between LEO satellites and a ground station via a geostationary data relay enable the positioning. An additional two-way pseudorange measurement between the ground station and the GEO satellite enables eliminating most of the biases. The residual biases can be estimated with high accuracies or have only small effect, like the ionospheric path delay in Ka-band. A time synchronization between the LEO satellites and the ground station via GNSS services replaces a clock estimation as known from GNSS positioning solutions. This enables low DOP values and therefore high positioning accuracy. A simulation environment was set up and a representative scenario based on a geostationary data relay was defined. Simulation results show that GEO satellite positioning accuracies at centimetre level are feasible. The high accuracies in GEO satellite position estimation enables predicting the orbit for more than 6 hours in advance with accuracies below 1 m.

In the concept of a GEO data relay, like recently developed in the "GeReLEO" project under the lead of the German Aerospace Centre (DLR), communication links at Ka-band between LEO satellites a GEO satellite and a ground station already exist (cf. [5]). The described positioning method thereby benefits from high signal to noise levels and larger baselines compared to ground based network solutions. A further main advantage of this solution is that the on-board systems can be kept simple as all the algorithms and the processing can be performed on ground.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, or groups described in conjunction with a particular aspect, embodiment or example of the invention are to be understood to be applicable to any other aspect, embodiment or example described herein unless incompatible therewith.

Table 1: LEO satellite constellation for a GEO data relay scenario.

| LEO Satellite Name | Apogee | Perigee | Inclination |
|---|---|---|---|
|  |  |  |  |
| AGILE | 540 km | 513 km | 2.5 deg |
| BIRD_2 | 536 km | 514 km | 97.8 deg |
| ERS-2 | 785 km | 783 km | 98.5 deg |
| GOCE | 265 km | 251 km | 96.6 deg |
| GRACE-A | 474 km | 452 km | 89.0 deg |
| METOP-A | 821 km | 820 km | 98.7 deg |
| PROBA | 655 km | 542 km | 97.6 deg |
| RAPIDEYE_1 | 648 km | 611 km | 98.0 deg |
| RAPIDEYE_2 | 639 km | 620 km | 98.0 deg |
| RAPIDEYE_3 | 639 km | 620 km | 98.0 deg |
| RAPIDEYE_4 | 638 km | 621 km | 98.0 deg |
| RAPIDEYE_5 | 642 km | 617 km | 98.0 deg |
| RUBIN-2 | 711 km | 592 km | 64.6 deg |
| TERRASAR-X | 509 km | 507 km | 97.5 deg |
| TOPSAT | 706 km | 682 km | 98.0 deg |

Table 2: Worst case link budget for the telemetry link of a LEO satellite via a GEO data relay to a ground station at Munich.

| Uplink: LEO-GEO | |
|---|---|
| | |
| Carrier Frequency | 27 GHz |
| LEO TX Antenna Diameter | 0.5 m |
| LEO TX power | 10.0 W |
| LEO EIRP | 50.4 dBW |
| Free Space Loss | 213.0 dB |
| GEO RX Global Horn Gain | 18.0 dBi |
| GEO RX System Noise Temp. | 560.0 K |
| GEO RX G/T | -9.5 dB/K |
| $C / N_0$ | 56.5 dBHz |
| | |
| Downlink: GEO-Ground | |
| | |
| Carrier Frequency | 27 GHz |
| GEO TX Antenna Diameter | 0.8 m |
| GEO TX power | 10.0 W |
| GEO EIRP | 54.6 dBW |
| Free Space Loss | 212.7 dB |
| Atmospheric Loss | 0.6 dB |
| Rain Loss | 9.8 dB |
| Ground RX Antenna Diameter | 3.0 m |
| Ground RX Gain | 56 dBi |
| Ground RX System Noise Temperature | 319.4 K |
| Ground RX G/T | 31.0 dB/K |
| $C / N_0$ | 88.1 dBHz |
| | |
| Overall $C / N_0$ | 56.0 dBHz |

Table 3: AWGN error models for pseudorange simulation.

| Summands of Stochastic Noise $\eta_{EL}^{k}$ | Standard deviation |
|---|---|
| | |
| $\delta \vec{x}_{L}^{k}$, LEO satellite position error | 5.0 cm |
| $\eta_{E}^{k}$, Receiver noise | 4.0 cm |
| | |
| Stochastic Noise $\eta_{TW}$ | |

(continued)

| Summands of Stochastic Noise $\eta_{EL}^k$ | Standard deviation |
|---|---|
| | |
| $\eta_E$, Receiver noise | 0.5 cm |
| | |
| Biases | |
| | |
| $I_{LG}^k$, Residual ionospheric delay | 1.0 cm |

**References**

[1] B. Visser, C. Sabol, S. Dahlke Geosynchronous Orbit Determination Using High Accuracy Angular Observations, AAS 05-135

[2] J. Yoon, K. Lee, B. Lee, B. Kim, K. Choi, Y. Chang, Y. Chun, S. Ra Geostationary Orbit Determination for Time Synchronization using Analytical Dynamic Models

[3] J. L. Ruiz, C. H. Frey Geosynchronous Satellite Use of GPS, 18th ION GNSS, Long Beach, CA, 2005

[4] D. J. Allain, C. N. Mitchell Ionospheric Delay Corrections for Single-Frequency GPS Receivers over Europe Using Tomographic Mapping, GPS Solutions, 13 (2), pp. 141-151, 2008

[5] Z. Katona GEO Data Relay for Low Earth Orbit Satellites, 6th Advanced Satellite Multimedia Systems Conference (ASMS) and 12th Signal Processing for Space Communications Workshop (SPSC), 2012

[6] J. S. Knogl, P. Henkel, Ch. Günther, Precise Positioning of a Geostationary Data Relay using LEO Satellites, Proceedings of 53rd ELMAR conference, pp. 325 - 328, 2011

[7] J. S. Knogl, P. Henkel, Ch. Günther, Accuracy Bounds for Positioning of Geostationary Data Relays using LEO Satellites, Proceedings of 54th ELMAR conference, 2012

[8] B. Haines, M. Armatys, Y. Bar-Sever, W. Bertiger, S. Desai, A. Dorsey, C. Lane, J. Weiss One-Centimetre Orbits in Near-Real Time: The GPS Experience on OSTM/JASON-2, CalTech, pp. 1-14, 2010

[9] P. Misra, P. Enge Global Positioning System: Signals, Measurements, and Performance (Revised Second Edition), Ganga-Jamuna Press, 2012

[10] E. D. Kaplan, C. Hegarty Understanding GPS: Principles and Applications (Second Edition), Artech House, Inc., 2006

[11] R. B. Langley, Dilution of Precision, GPS World, 1999, pp. 52-59.

[12] SEBASTIAN KNOGL J ET AL: "Precise positioning of a geostationary data relay using LEO satellites", ELMAR, 2011 PROCEEDINGS, IEEE, 14 September 2011 (2011-09-14), pages 325-328, XP031976472, ISBN: 978-1-61284-949-2

[13] Toshiaki Iwata ET AL: "Remote Synchronization Experiments for Quasi-Senith Satellite System Using Current Geostationary Satellites", INTERNATIONAL JOURNAL OF NAVIGATION AND OBSERVATION, vol. 48, no. 1, 1 January 2010 (2010-01-01), pages 137-10, XP055290303, US ISSN: 1687-5990, DOI: 10.1155/2008/462062

**Claims**

1.  A method for determining the position of a high orbit satellite (2), which is a geostationary satellite, situated above a plurality of navigation satellites (4) wherein:

    - navigation signals emitted by navigation satellites (4) are received by a plurality of navigation devices (22), wherein the navigation devices (22) are situated on low orbit satellites (6) and below the navigation satellites (4) and wherein the navigation signals are used for determining the position of the navigation devices (22);
    - at the position of the navigation devices (22) positioning signals are emitted, which are received by the high orbit satellite (2) and transmitted to a central unit (9, 29);
    - the central unit (9, 29) measures time delays of the positioning signals along their way from the navigation devices (22) to the central unit (9, 29) and determines the position of the high orbit satellite (2) based on the measured time delays,
    - each one of the navigation devices (22) uses information on its own position and the position of the central unit (9, 29) for synchronizing a clock at the place of the navigation device (22) with a central unit clock of the central unit (9, 29),
    - timing information on the emission time of the positioning signal from the place of the navigation device (22) to the central unit (9, 29) is transmitted to the central unit (9, 29), and
    - the timing information is used by the central unit (9, 29) for determining the time delay of the positioning signals along their way from the navigation devices (22) via the high orbit satellite (2) to the central unit (9, 29),

    **characterised in that** the measured time delays are processed by a ground station (9) for determining the position of the high orbit satellite (2).

2.  The method according to Claim 1,
    wherein the positioning signals are formed by timing information embedded in a protocol for transmitting information from the place of the navigation device (22) to the central unit (9, 29) and wherein the central unit (9, 29) uses the timing information for determining the time delay of the positioning signals along their way from the navigation devices (22) via the high orbit satellite (2) to the central unit (9, 29).

3.  The method according to Claim 1 or 2,
    wherein each navigation device (22) is provided in a low orbit satellite (6) and/or wherein the positions of low orbit satellites (6) are determined by each low orbit satellite (6) receiving navigation signals from navigation satellites (4) and processing the navigation signals for determining its own position.

4.  The method according to any one of Claims 1 to 3,
    wherein the central unit is provided in a ground station (9).

5.  The method according to any one of Claims 1 to 3,
    wherein the central unit is provided in a satellite (29).

6.  The method according to any one of Claims 1 to 3,
    wherein the central unit is distributed among a satellite (29) and a ground station (9), wherein the positioning signals are received by components of the central unit on the satellite (29) and wherein the measured time delays are processed by the ground station (9) for determining the position of the high orbit satellite (2).

7.  The method according to any one of Claims 1 to 6,
    wherein a two-way range measurement is repeatedly performed by means of a two-way range signal exchanged between the central unit (9, 29) and the high orbit satellite (2) and wherein the two-way range measurements are used for determining systematic environmental and instrumental errors, wherein the range and the environmental and instrumental errors are separated based on the differing temporal variation of the changing position of the high orbit satellite (2) and the static systematic environmental and instrumental errors.

8.  The method according to Claim 7,
    wherein the environmental and instrumental errors are determined by determining the unit vectors pointing from the central unit (9, 29) to the high orbit satellite (2) by a least-square method and by applying a Kalman filter to the two-way range measurement with the position of the high orbit satellite (2), and the environmental and instrumental errors as state variables.

9. The method according to Claim 8,
wherein the range between the central unit (9, 29) and the high orbit satellite (2) is separated in a previously known range and a variation of the range and wherein the range is determined by determining the variation of the range from the previously known range.

10. The method according to any one of Claims 1 to 9,
wherein each navigation device (22) emit the positioning signals at multiple carrier frequencies and wherein the two-way measurement signals are emitted at frequencies, that correspond to the frequencies, at which the navigation devices (22) emit their positioning signal.

11. The method according to any one of Claims 8 to 10,
wherein the environmental and instrumental errors are determined by using geometry-preserving, ionosphere-free linear combinations of the range measurements for determining the tropospheric error, the bias of the high orbit satellite (2) and the bias of the ground station (9).

12. The method according to any one of Claims 1 to 11,
wherein the time delays of the positioning signals are determined by code measurements, whose noise is suppressed by phase smoothing the code measurement, wherein the phase smoothing is performed by:

- generating a difference signal by subtracting a phase measurement on the carrier signal from the code measurement,
- filtering the difference signal by a noise-suppressing linear filter, and by
- adding the phase measurement to the difference signal.

13. The method according to any one of Claims 1 to 12,
wherein the position of the high orbit satellite (2) is determined based on the measured time delay of the positioning signals by using a Kalman filter with the position of the high orbit satellite (2) as a state variable, and wherein optionally the residuum of at least one state variable is determined.

14. The method according to Claims 3 and 4,
wherein the clock of each low orbit satellite (6) and the clock of the ground station (9) is synchronized by determining the temporal offset between the clock of the low orbit satellite (6) and the clock of the ground station (9) by synchronization signals exchanged directly between each one of the low orbit satellite (6) and the clock of the ground station (9).

15. A satellite system comprising a high orbit satellite (2), which is a geostationary satellite (2), a plurality of navigation satellites (4), a plurality of navigation devices (22), and a central unit (9, 29), wherein:

- the navigation devices are located on low orbit satellites (6) at a lower altitude with respect to the earth surface than the navigation satellites (4) and are equipped for receiving navigation signals emitted by the navigation satellites (4), wherein the navigation signals are arranged for determining the position of the navigation devices (22), and are further equipped for emitting positioning signals;
- the high orbit satellite (2) is arranged for receiving the positioning signal emitted by the navigation devices (22) and for transmitting the positioning signals to the central unit (9, 29);
- the central unit (9, 29) is provided with means for measuring time delays of the positioning signals along their way from the navigation devices (22) to the central unit (9, 29) and for determining the position of the high orbit satellite (2) based on the measured time delays;
- each one of the navigation devices (22) is arranged for using information on its own position and the position of the central unit (9, 29) for synchronizing a clock at the place of the navigation device (22) with a central unit clock;
- the satellite system is arranged for transmitting timing information on the emission time of the positioning signal from the place of the navigation device (22) to the central unit (9, 29); and
- the central unit (9, 29) is arranged for using the timing information for determining the time delay of the positioning signals along their way from the navigation devices (22) via the high orbit satellite (2) to the central unit (9, 29),

**characterised in that** the measured time delays are processed by a ground station (9) for determining the position of the high orbit satellite (2).

**Patentansprüche**

1.  Verfahren zur Bestimmung der Position eines Satelliten (2) mit hoher Umlaufbahn, der ein geostationärer Satellit ist und über einer Vielzahl von Navigationssatelliten (4) angeordnet ist, wobei:

    - von den Navigationssatelliten (4) emittierte Navigationssignale durch eine Vielzahl von Navigationsgeräten (22) empfangen werden, wobei die Navigationsgeräte (22) auf Satelliten (6) mit niedriger Erdumlaufbahn und unterhalb der Navigationssatelliten (4) angeordnet sind und wobei die Navigationssignale dazu verwendet werden, die Position der Navigationsgeräte (22) zu bestimmen;
    - an der Position der Navigationsgeräte (22) werden Positioniersignale emittiert, die von dem Satelliten (2) mit hoher Umlaufbahn empfangen und an eine Zentraleinheit (9, 29) übertragen werden;
    - die Zentraleinheit (9, 29) Zeitverzögerungen der Positioniersignale entlang ihrem Weg von den Navigationsgeräten (22) zu der Zentraleinheit (9, 29) misst und die Position des Satelliten (2) mit hoher Umlaufbahn anhand der gemessenen Zeitverzögerungen bestimmt;
    - jedes der Navigationsgeräte (22) Informationen über die eigene Position und die Position der Zentraleinheit (9, 29) dazu verwendet, eine Uhr am Ort des Navigationsgeräts (22) mit einer Zentraleinheitsuhr der Zentraleinheit (9, 29) zu synchronisieren;
    - Zeitinformation über die Emissionszeit des Positioniersignals vom Ort des Navigationsgeräts (22) zur Zentraleinheit (9, 29) an die Zentraleinheit (9, 29) übertragen wird; und
    - die Zeitinformation von der Zentraleinheit (9, 29) dazu verwendet ist, die Zeitverzögerung der Positioniersignale entlang dem Weg von den Navigationsgeräten (22) über den Satelliten (2) mit hoher Umlaufbahn zur Zentraleinheit (9, 29) zu bestimmen,

    **dadurch gekennzeichnet, dass** die gemessenen Zeitverzögerungen durch eine Bodenstation (9) verarbeitet werden, um die Position des Satelliten (2) mit hoher Umlaufbahn zu bestimmen.

2.  Verfahren nach Anspruch 1,
    bei dem die Positioniersignale von Zeitinformationen gebildet werden, die in ein Protokoll eingebettet sind, um Informationen vom Ort des Navigationsgeräts (22) zu der Zentraleinheit (9, 29) zu übertragen, und bei dem die Zentraleinheit (9, 29) die Zeitinformation dazu benutzt, die Zeitverzögerung der Positioniersignale entlang deren Weg von den Navigationsgeräten (22) über den Satelliten (2) mit hoher Umlaufbahn zu der Zentraleinheit (9, 29) zu bestimmen.

3.  Verfahren nach Anspruch 1 oder 2,
    bei dem jedes Navigationsgerät (22) in einem Satelliten (6) mit niedriger Umlaufbahn vorgesehen ist und/oder bei dem die Position der Satelliten (6) mit niedriger Umlaufbahn von jedem Satelliten (6) mit niedriger Umlaufbahn bestimmt werden, indem Navigationssignale von den Navigationssatelliten (4) erhalten werden und die Navigationssignale zur Bestimmung der eigenen Position verarbeitet werden.

4.  Verfahren nach einem der Ansprüche 1 bis 3,
    bei dem die Zentraleinheit in einer Bodenstation (9) vorgesehen ist.

5.  Verfahren nach einem der Ansprüche 1 bis 3,
    bei dem die Zentraleinheit in einem Satelliten (29) vorgesehen ist.

6.  Verfahren nach einem der Ansprüche 1 bis 3,
    bei dem die Zentraleinheit über einen Satelliten (29) und eine Bodenstation (9) verteilt ist, wobei die Positioniersignale durch Komponenten der Zentraleinheit auf dem Satelliten (29) empfangen werden und wobei die gemessenen Zeitverzögerungen durch die Bodenstation (9) verarbeitet werden, um die Position des Satelliten (2) mit hoher Umlaufbahn zu bestimmen.

7.  Verfahren nach einem der Ansprüche 1 bis 6,
    bei dem eine Zwei-Wege-Entfernungsmessung mithilfe eines Zwei-Wege-Entfernungssignals wiederholt ausgeführt wird, das zwischen der Zentraleinheit (9, 29) und dem Satelliten (2) mit hoher Umlaufbahn ausgetauscht wird und bei dem die Zwei-Wege-Entfernungsmessung dazu verwendet wird, die systematischen Umgebungsfehler und Instrumentenfehler zu bestimmen, wobei die Entfernung und die Umgebungsfehler und Instrumentenfehler anhand der unterschiedlichen zeitlichen Variation der sich ändernden Position des Satelliten (2) mit hoher Umlaufbahn und der statischen systematischen Umgebungsfehlern und Instrumentenfehlern separiert werden.

**8.** Verfahren nach Anspruch 7,
bei dem die Umgebungsfehler und Instrumentenfehler bestimmt werden, indem die Einheitsvektoren, die von der Zentraleinheit (9, 29) zu dem Satelliten (2) mit hoher Umlaufbahn zeigen, durch ein Verfahren der kleinsten Quadrate bestimmt wird, und indem ein Kalmanfilter auf die Zwei-Wege-Entfernungsmessungen angewandt wird, mit der Position des Satelliten (2) mit hoher Umlaufbahn und den Umgebungsfehlern und Instrumentenfehlern als Zustandsvariablen.

**9.** Verfahren nach Anspruch 8,
bei dem die Entfernung zwischen der Zentraleinheit (9, 29) und dem Satelliten (2) mit hoher Umlaufbahn in eine vorbekannte Entfernung und eine Entfernungsänderung separiert wird und bei dem die Entfernung bestimmt wird, indem die Änderung der Entfernung von der vorbekannten Entfernung bestimmt wird.

**10.** Verfahren nach einem der Ansprüche 1 bis 9,
bei dem jedes Navigationsgerät (22) die Positioniersignale auf mehrfachen Trägerfrequenzen emittiert und wobei die Zwei-Wege-Entfernungssignale auf Frequenzen emittiert werden, die den Frequenzen entsprechen, über die die Navigationsgeräte (22) ihre Positioniersignale emittieren.

**11.** Verfahren nach einem der Ansprüche 8 bis 10,
bei dem die Umgebungsfehler und Instrumentenfehler bestimmt werden, indem Geometrie erhaltende, ionosphärenfreie Linearkombinationen der Entfernungsmessungen verwendet werden, um den troposphärischen Fehler, die systematischen Fehler des Satelliten (2) mit hoher Umlaufbahn und die systematischen Fehler der Bodenstation (9) zu bestimmen.

**12.** Verfahren nach einem der Ansprüche 1 bis 11,
bei dem die Zeitverzögerung der Positioniersignale durch Codemessungen bestimmt werden, deren Rauschen unterdrückt wird, indem die Codemessungen phasengeglättet werden, wobei die Phasenglättung ausgeführt wird durch:

- Erzeugen eines Differenzsignals, indem eine Phasenmessung am Trägersignal von der Codemessung abgezogen wird,
- Filtern des Differenzsignals durch einen rauschunterdrückenden, linearen Filter, und durch
- Addieren der Phasenmessung zum Differenzsignal.

**13.** Verfahren nach einem der Ansprüche 1 bis 12,
bei dem die Position des Satelliten (2) mit hoher Umlaufbahn anhand der gemessenen Zeitverzögerung der Positioniersignale bestimmt wird, indem ein Kalmanfilter mit der Position des Satelliten (2) mit hoher Umlaufbahn als Zustandsvariable verwendet wird, und wobei optional das Residuum von wenigstens einer Zustandsvariable bestimmt wird.

**14.** Verfahren nach Anspruch 3 und 4,
bei dem die Uhr von jedem Satelliten (6) mit niedriger Umlaufbahn und die Uhr der Bodenstation (9) synchronisiert wird, indem der zeitliche Versatz zwischen der Uhr des Satelliten (6) mit niedriger Umlaufbahn und der Uhr der Bodenstation (9) mithilfe von Synchronisierungssignalen bestimmt wird, die unmittelbar zwischen jedem der Satelliten (6) mit niedriger Umlaufbahn und der Uhr der Bodenstation (9) ausgetauscht werden.

**15.** Satellitensystem mit einem Satelliten (2) mit hoher Umlaufbahn, der ein geostationärer Satellit (2) ist, einer Vielzahl von Navigationssatelliten (4), einer Vielzahl von Navigationsgeräten (22) und einer Zentraleinheit (9, 29), wobei:

- die Navigationsgeräte auf Satelliten (6) mit niedriger Umlaufbahn angeordnet sind, mit einer bezüglich der Erdoberfläche niedrigen Höhe als die Navigationssatelliten (4), und dazu eingerichtet sind, Navigationssignale zu empfangen, die von den Navigationssatelliten (4) emittiert werden, wobei die Navigationssignale zur Bestimmung der Position der Navigationsgeräte (22) eingerichtet sind, und ferner dazu ausgestattet sind, Positioniersignale zu emittieren;
- der Satellit (2) mit hoher Umlaufbahn dazu eingerichtet ist, die von den Navigationsgeräten (22) emittierten Positioniersignale zu empfangen und die Positioniersignale an die Zentraleinheit (9, 29) zu übertragen;
- die Zentraleinheit (9, 29) mit Mitteln versehen ist, um die Zeitverzögerung der Positioniersignale entlang deren Weg von den Navigationsgeräten (22) zu der Zentraleinheit (9, 29) zu messen und die Position des Satelliten (2) mit hoher Umlaufbahn anhand der gemessenen Zeitverzögerungen zu bestimmen;

- jedes der Navigationsgeräte (22) dazu eingerichtet ist, Informationen über seine eigene Position und die Position der Zentraleinheit (9, 29) dazu zu benutzen, eine Uhr am Ort des Navigationsgeräts (22) mit einer Zentraleinheitsuhr zu synchronisieren;

- das Satellitensystem dazu eingerichtet ist, Zeitinformationen über die Emissionszeit des Positioniersignals vom Ort des Navigationsgeräts (22) zu der Zentraleinheit (9, 29) zu übertragen; und

- die Zentraleinheit (9, 29) dazu eingerichtet ist, die Zeitinformation dazu zu verwenden, um die Zeitverzögerung der Positioniersignale entlang deren Weg von den Navigationsgeräten (22) über den Satelliten (2) mit hoher Umlaufbahn zu der Zentraleinheit (9, 29) zu bestimmen,

**dadurch gekennzeichnet, dass** die gemessenen Zeitverzögerungen durch eine Bodenstation (9) verarbeitet werden, um die Position des Satelliten (2) mit hoher Umlaufbahn zu bestimmen.

## Revendications

1. Procédé de détermination de la position d'un satellite en orbite élevée (2), qui est un satellite géostationnaire, situé au-dessus d'une pluralité de satellites de navigation (4), dans lequel :

- des signaux de navigation émis par des satellites de navigation (4) sont reçus par une pluralité de dispositifs de navigation (22), dans lequel les dispositifs de navigation (22) sont situés sur des satellites en orbite basse (6) et en dessous des satellites de navigation (4), et dans lequel les signaux de navigation sont utilisés pour déterminer la position des dispositifs de navigation (22) ;

- à la position des dispositifs de navigation (22), des signaux de positionnement sont émis, qui sont reçus par le satellite en orbite élevée (2) et transmis à une unité centrale (9, 29) ;

- l'unité centrale (9, 29) mesure les temps de propagation des signaux de positionnement le long de leur trajet des dispositifs de navigation (22) à l'unité centrale (9, 29) et détermine la position du satellite en orbite élevée (2) en fonction des temps de propagation mesurés,

- chacun des dispositifs de navigation (22) utilise des informations sur sa propre position et la position de l'unité centrale (9, 29) pour synchroniser une horloge à la place du dispositif de navigation (22) avec une horloge de l'unité centrale (9, 29),

- des informations de répartition dans le temps sur le temps d'émission du signal de positionnement de la place du dispositif de navigation (22) à l'unité centrale (9, 29) sont transmises à l'unité centrale (9, 29), et

- les informations de répartition dans le temps sont utilisées par l'unité centrale (9, 29) pour déterminer le temps de propagation des signaux de positionnement le long de leur trajet des dispositifs de navigation (22) par le biais du satellite en orbite élevée (2) à l'unité centrale (9, 29),

**caractérisé en ce que** les temps de propagation mesurés sont traités par une station terrestre (9) pour déterminer la position du satellite en orbite élevée (2).

2. Procédé selon la revendication 1,
dans lequel les signaux de positionnement sont formés par des informations de répartition dans le temps intégrées dans un protocole pour transmettre des informations de la place du dispositif de navigation (22) à l'unité centrale (9, 29) et dans lequel l'unité centrale (9, 29) utilise les informations de répartition dans le temps pour déterminer le temps de propagation des signaux de positionnement le long de leur trajet des dispositifs de navigation (22) par le biais du satellite en orbite élevée (2) à l'unité centrale (9, 29).

3. Procédé selon la revendication 1 ou 2,
dans lequel chaque dispositif de navigation (22) est prévu dans un satellite en orbite basse (6) et/ou
dans lequel les positions de satellites en orbite basse (6) sont déterminées par chaque satellite en orbite basse (6) recevant des signaux de navigation de satellites de navigation (4) et traitant les signaux de navigation pour déterminer sa propre position.

4. Procédé selon l'une quelconque des revendications 1 à 3,
dans lequel l'unité centrale est prévue dans une station terrestre (9).

5. Procédé selon l'une quelconque des revendications 1 à 3,
dans lequel l'unité centrale est prévue dans un satellite (29).

**6.** Procédé selon l'une quelconque des revendications 1 à 3,
dans lequel l'unité centrale est distribuée parmi un satellite (29) et une station terrestre (9), dans lequel les signaux de positionnement sont reçus par des composants de l'unité centrale sur le satellite (29) et dans lequel les temps de propagation mesurés sont traités par la station terrestre (9) pour déterminer la position du satellite en orbite élevée (2).

**7.** Procédé selon l'une quelconque des revendications 1 à 6,
dans lequel une mesure de distance bidirectionnelle est réalisée de manière répétée au moyen d'un signal de distance bidirectionnelle échangé entre l'unité centrale (9, 29) et le satellite en orbite élevée (2), et dans lequel les mesures de distance bidirectionnelle sont utilisées pour déterminer des erreurs environnementales et instrumentales systématiques, dans lequel la distance et les erreurs environnementales et instrumentales sont séparées en fonction de la variation temporelle qui diffère de la position changeante du satellite en orbite élevée (2) et des erreurs environnementales et instrumentales systématiques statiques.

**8.** Procédé selon la revendication 7,
dans lequel les erreurs environnementales et instrumentales sont déterminées en déterminant les vecteurs unitaires pointant de l'unité centrale (9, 29) au satellite en orbite élevée (2) par une méthode des moindres carrés et en appliquant un filtre de Kalman à la mesure de distance bidirectionnelle avec la position du satellite en orbite élevée (2), et les erreurs environnementales et instrumentales en tant que variables d'état.

**9.** Procédé selon la revendication 8,
dans lequel la distance entre l'unité centrale (9, 29) et le satellite en orbite élevée (2) est séparée en une distance précédemment connue et une variation de la distance, et dans lequel la distance est déterminée en déterminant la variation de la distance à partir de la distance précédemment connue.

**10.** Procédé selon l'une quelconque des revendications 1 à 9,
dans lequel chaque dispositif de navigation (22) émet les signaux de positionnement à de multiples fréquences porteuses et dans lequel les signaux de mesure bidirectionnelle sont émis à des fréquences qui correspondent aux fréquences auxquelles les dispositifs de navigation (22) émettent leur signal de positionnement.

**11.** Procédé selon l'une quelconque des revendications 8 à 10,
dans lequel les erreurs environnementales et instrumentales sont déterminées en utilisant des combinaisons linéaires préservant la géométrie, exemptes d'ionosphère, des mesures de distance pour déterminer l'erreur troposphérique, l'inclinaison du satellite en orbite élevée (2) et l'inclinaison de la station terrestre (9).

**12.** Procédé selon l'une quelconque des revendications 1 à 11,
dans lequel les temps de propagation des signaux de positionnement sont déterminés par des mesures de code dont le bruit est supprimé par lissage de phase de la mesure de code, dans lequel le lissage de phase est réalisé en :

- générant un signal de différence en soustrayant une mesure de phase sur le signal porteur de la mesure de code,
- filtrant le signal de différence par un filtre linéaire à suppression de bruit, et en
- ajoutant la mesure de phase au signal de différence.

**13.** Procédé selon l'une quelconque des revendications 1 à 12,
dans lequel la position du satellite en orbite élevée (2) est déterminée en fonction du temps de propagation mesuré des signaux de positionnement en utilisant un filtre de Kalman avec la position du satellite en orbite élevée (2) en tant que variable d'état, et dans lequel en option le résidu d'au moins une variable d'état est déterminé.

**14.** Procédé selon les revendications 3 et 4,
dans lequel l'horloge de chaque satellite en orbite basse (6) et l'horloge de la station terrestre (9) sont synchronisées en déterminant le décalage temporel entre l'horloge du satellite en orbite basse (6) et l'horloge de la station terrestre (9) par des signaux de synchronisation échangés directement entre chacun du satellite en orbite basse (6) et de l'horloge de la station terrestre (9).

**15.** Système de satellites comprenant un satellite en orbite élevée (2), qui est un satellite géostationnaire (2), une pluralité de satellites de navigation (4), une pluralité de dispositifs de navigation (22) et une unité centrale (9, 29), dans lequel :

- les dispositifs de navigation sont situés sur des satellites en orbite basse (6) à une altitude inférieure par rapport à la surface terrestre aux satellites de navigation (4) et sont équipés pour recevoir des signaux de navigation émis par les satellites de navigation (4), dans lequel les signaux de navigation sont agencés pour déterminer la position des dispositifs de navigation (22), et sont en outre équipés pour émettre des signaux de positionnement ;

- le satellite en orbite élevée (2) est agencé pour recevoir le signal de positionnement émis par les dispositifs de navigation (22) et pour transmettre les signaux de positionnement à l'unité centrale (9, 29) ;

- l'unité centrale (9, 29) est pourvue de moyens pour mesurer les temps de propagation des signaux de positionnement le long de leur trajet des dispositifs de navigation (22) à l'unité centrale (9, 29) et pour déterminer la position du satellite en orbite élevée (2) en fonction des temps de propagation mesurés ;

- chacun des dispositifs de navigation (22) est agencé pour utiliser des informations sur sa propre position et la position de l'unité centrale (9, 29) pour synchroniser une horloge à la place du dispositif de navigation (22) avec une horloge d'unité centrale ;

- le système de satellites est agencé pour transmettre des informations de répartition dans le temps sur le temps d'émission du signal de positionnement de la place du dispositif de navigation (22) à l'unité centrale (9, 29) ; et

- l'unité centrale (9, 29) est agencée pour utiliser les informations de répartition dans le temps pour déterminer le temps de propagation des signaux de positionnement le long de leur trajet des dispositifs de navigation (22) par le biais du satellite en orbite élevée (2) à l'unité centrale (9, 29),

**caractérisé en ce que** les temps de propagation mesurés sont traités par une station terrestre (9) pour déterminer la position du satellite en orbite élevée (2).

# FIG 1

# FIG 3

# FIG 2

Position Determination
of LEO Satellite ~ 10

↓

Synchronisation of Clocks in
LEO Satellite and Ground Station ~ 11

↓

Pseudorange Measurement
on Positioning Signals ~ 12

Two-Way-Measurement — 13

↓

Determining of Some
Systematic Errors — 14

Position Determination
of GEO Satellite ~ 15

↓

Verification ~ 16

FIG 4

# FIG 5

# FIG 6

FIG 7

FIG 8

EP 2 741 108 B1

FIG 9

28

## REFERENCES CITED IN THE DESCRIPTION

**Non-patent literature cited in the description**

- **B. VISSER ; C. SABOL ; S. DAHLKE.** Geosynchronous Orbit Determination Using High Accuracy Angular Observations. *AAS 05-135*
- **J. YOON ; K. LEE ; B. LEE ; B. KIM ; K. CHOI ; Y. CHANG ; Y. CHUN ; S. RA.** *Geostationary Orbit Determination for Time Synchronization using Analytical Dynamic Models*
- **J. L. RUIZ ; C. H. FREY.** *Geosynchronous Satellite Use of GPS, 18th ION GNSS,* 2005
- **D. J. ALLAIN ; C. N. MITCHELL.** Ionospheric Delay Corrections for Single-Frequency GPS Receivers over Europe Using Tomographic Mapping. *GPS Solutions,* 2008, vol. 13 (2), 141-151
- **Z. KATONA.** 6th Advanced Satellite Multimedia Systems Conference (ASMS) and 12th Signal Processing for Space Communications Workshop (SPSC). *GEO Data Relay for Low Earth Orbit Satellites,* 2012
- **J. S. KNOGL ; P. HENKEL ; CH. GÜNTHER.** Precise Positioning of a Geostationary Data Relay using LEO Satellites. *Proceedings of 53rd ELMAR conference,* 2011, 325-328
- **J. S. KNOGL ; P. HENKEL ; CH. GÜNTHER.** Accuracy Bounds for Positioning of Geostationary Data Relays using LEO Satellites. *Proceedings of 54th ELMAR conference,* 2012
- **B. HAINES ; M. ARMATYS ; Y. BAR-SEVER ; W. BERTIGER ; S. DESAI ; A. DORSEY ; C. LANE ; J. WEISS.** *One-Centimetre Orbits in Near-Real Time: The GPS Experience on OSTM/JASON-2, CalTech,* 2010, 1-14
- **P. MISRA ; P. ENGE.** Global Positioning System: Signals, Measurements, and Performance. Ganga-Jamuna Press, 2012
- **E. D. KAPLAN ; C. HEGARTY.** Understanding GPS: Principles and Applications. Artech House, Inc, 2006
- **R. B. LANGLEY.** Dilution of Precision. *GPS World,* 1999, 52-59
- Precise positioning of a geostationary data relay using LEO satellites. **SEBASTIAN KNOGL J et al.** ELMAR, 2011 PROCEEDINGS. IEEE, 14 September 2011, 325-328
- **TOSHIAKI IWATA et al.** Remote Synchronization Experiments for Quasi-Senith Satellite System Using Current Geostationary Satellites. *INTERNATIONAL JOURNAL OF NAVIGATION AND OBSERVATION,* 01 January 2010, vol. 48 (1), ISSN 1687-5990, 137-10